# EUROPÄISCHE PATENTSCHRIFT

(11) **EP 2 062 777 B1**
(45) Veröffentlichungstag und Bekanntmachung des Hinweises auf die Patenterteilung: **16.06.2010**
(21) Anmeldenummer: 07022598.2
(22) Anmeldetag: 21.11.2007
(51) Int. Cl.: B60R 1/00, B60S 1/08

(54) **Optisches Modul**
Optical module
Module optique

(43) Veröffentlichungstag der Anmeldung: 27.05.2009
(73) Patentinhaber: Delphi Technologies, Inc., Troy, Michigan 48007 (US)
(72) Erfinder: Egbert, Peter, 51766 Engelskirchen (DE); Görmer, Steffen M., 42281 Wuppertal (DE); Park, Su-Birm, Dr., 52457 Aldenhoven (DE)
(74) Vertreter: Denton, Michael John

(56) Entgegenhaltungen:
- EP-A- 1 580 092
- WO-A-2004/007255
- WO-A-2006/015905
- DE-A1- 19 950 060

## Beschreibung

Die Erfindung betrifft ein optisches Modul für ein einen Umgebungsbereich eines Fahrzeugs erfassendes Assistenzsystem mit einer im Bereich einer Innenseite einer Scheibe, insbesondere Windschutzscheibe, des Fahrzeugs angeordneten und in den Umgebungsbereich des Fahrzeugs gerichteten Kamera mit einem Objektiv, durch welches ein Fernbereich auf einen ersten Abschnitt einer Sensorfläche der Kamera scharf abbildbar ist.

Ein derartiges optisches Modul ist grundsätzlich bekannt und kommt beispielsweise bei einem Nachtsichtassistenzsystem oder bei einem System zur Fahrspurerkennung, Spurwechselwarnung, Hinderniswarnung, Pre-Crash-Erkennung, automatischen Geschwindigkeitsadaption, Verkehrszeichenerkennung oder bei einem Stauassistenzsystem zum Einsatz.

Es ist ferner bekannt, das optische Modul zusätzlich mit einer Regensensorfunktionalität auszustatten. Hierzu wird beispielsweise Licht derart in die Scheibe eingekoppelt, dass es zumindest annähernd vollständig an der Außenseite der Scheibe reflektiert wird, wenn die Scheibenaußenseite trocken ist, und zumindest teilweise an der Scheibenaußenseite aus dieser auskoppelt, wenn sich Wassertropfen auf dieser befinden. Durch die Kamera wird die Intensität des an der Scheibenaußenseite reflektierten Lichts detektiert, und aus der detektierten Lichtintensität wird der Grad der Benetzung der Scheibe mit Wasser und somit die Regenintensität ermittelt.

Aus der EP-A-1 580 092 ist ein optisches Modul mit den Merkmalen des Oberbegriffs des Anspruchs 1 bekannt. Ähnliche optische Module sind in der WO-A-2004/007255 und der WO-A-2006/015905 beschrieben.

Der Erfindung liegt die Aufgabe zugrunde, ein optisches Modul der eingangs genannten Art mit einer verbesserten Regensensorfunktionalität zu schaffen.

Zur Lösung der Aufgabe ist ein optisches Modul für ein einen Umgebungsbereich eines Fahrzeugs erfassendes Assistenzsystem mit den Merkmalen des Anspruchs 1 vorgesehen.

Das erfindungsgemäße optische Modul umfasst eine im Bereich einer Innenseite einer Scheibe, insbesondere Windschutzscheibe, des Fahrzeugs angeordnete und in den Umgebungsbereich des Fahrzeugs gerichtete Kamera mit einem Objektiv, durch welches ein Fernbereich auf einen ersten Abschnitt einer Sensorfläche der Kamera scharf abbildbar ist. Unter Fernbereich wird in diesem Kontext ein Bereich verstanden, der von einer Entfernung von mehreren Metern zu der Kamera bis ins Unendliche reicht. Das Objektiv ist mit anderen Worten auf Unendlich scharf gestellt.

Des Weiteren umfasst das erfindungsgemäße optische Modul eine optische Anordnung, welche im Sichtfeld der Kamera angeordnet ist und durch welche ein einen Detektionsbereich der Scheibe umfassender Nahbereich auf einen zweiten Abschnitt der Sensorfläche der Kamera scharf abbildbar ist. Als Nahbereich wird in diesem Kontext ein Bereich bezeichnet, der sich um allenfalls wenige Zentimeter vor und hinter der Scheibe erstreckt. Die optische Anordnung bewirkt mit anderen Worten also eine zusätzliche Scharfstellung der Kamera auf einen Teil der Scheibe, nämlich den sogenannten Detektionsbereich, welche aufgrund der geringen Schärfentiefe des auf Unendlich scharf gestellten Objektivs durch das Objektiv für sich genommen nicht erreichbar wäre.

Erfindungsgemäß ist es also möglich, mit Hilfe einer einzigen Kamera nicht nur einen Fernbereich der Fahrzeugumgebung, sondern gleichzeitig auch einen Teil der Scheibe zu beobachten. Dabei besitzt der durch die optische Anordnung abgebildete Teil des Bildes eine so geringe Schärfentiefe, dass durch die optische Anordnung nur solche Objekte scharf abgebildet werden, die sich maximal einige Zentimeter vor bzw. hinter der Scheibe befinden. Auf diese Weise können auf der Scheibe befindliche Objekte, insbesondere Wassertropfen, Eiskristalle oder Schneeflocken, detektiert werden, während weiter entfernte Objekte nicht scharf dargestellt werden und somit das Detektionsergebnis nicht verfälschen können. Das Ergebnis dieser Objektdetektion lässt sich somit zu einer besonders genauen und zuverlässigen Bestimmung der Regen- oder Schneefallintensität heranziehen, beispielsweise um durch eine entsprechende Einstellung eines Wischintervalls einen möglichst effizienten Betrieb eines Scheibenwischers zu erreichen.

Den zur Beobachtung des Detektionsbereichs der Scheibe verwendeten zweiten Abschnitt der Sensorfläche bildet bevorzugt ein Abschnitt der Sensorfläche, welcher nicht für die Kernfunktionalität, z.B. die Fahrspur- oder Verkehrszeichenerkennung oder die Nachtsichtassistenz, verwendet wird. Bei dem zweiten Abschnitt kann es sich beispielsweise um einen unteren Abschnitt der Sensorfläche handeln, auf dem bei nicht vorhandener optischer Anordnung z.B. die Motorhaube des Fahrzeugs abgebildet würde.

Um eine möglichst kompakte Bauweise des optischen Moduls zu erreichen, umfasst die optische Anordnung einen Spiegel, welcher aus dem Detektionsbereich der Scheibe austretendes Licht durch die Linse und in die Kamera lenkt.

Wie erwähnt beruht die durch das erfindungsgemäße optische Modul ermöglichte Ermittlung der Regenintensität auf einer Detektion von Objekten auf der Scheibe. Hierzu ist bei Tag typischerweise keine Ausleuchtung des Detektionsbereichs der Scheibe durch eine eigens dafür vorgesehene Lichtquelle erforderlich, da das Tageslicht normalerweise ausreicht, um relevante Objekte, wie z.B. Regentropfen, auf der Scheibe sichtbar zu machen. Erfindungsgemäß ist aber dennoch eine Lichtquelle zur Ausleuchtung des Detektionsbereichs der Scheibe vorgesehen, um eine Detektion von auf der Scheibe befindlichen Objekten auch bei Nacht zu ermöglichen.

Die Lichtquelle ist auf einer der Kamera abgewandten Seite des Spiegels angeordnet, was zu der kompakten Bauweise des optischen Moduls beiträgt.

Vorteilhafte Ausbildungen der Erfindung sind den Unteransprüchen, der Beschreibung und der Zeichnung zu entnehmen.

Gemäß einer Ausführungsform umfasst die optische Anordnung mindestens eine zwischen der Scheibe und dem Kameraobjektiv angeordnete Linse. Durch die Linse, welche vorzugsweise eine Sammellinse umfasst, wird die Fokussierung der Kamera auf den Nahbereich erreicht, sodass der Detektionsbereich der Scheibe in dem Schärfentiefenbereich der Kamera liegt.

Um zu verhindern, dass die Kernfunktionalität des optischen Moduls durch von dem Spiegel umgelenktes Licht beeinträchtigt wird, kann die optische Anordnung ferner eine Sichtblende umfassen, welche verhindert, dass von dem Spiegel umgelenktes Licht auf den ersten Abschnitt der Sensorfläche der Kamera trifft.

Die Lichtquelle kann wenigstens eine Leuchtdiode aufweisen, welche vorzugsweise im infraroten und somit für das menschliche Auge nicht sichtbaren Wellenlängenbereich emittiert, um beispielsweise andere Verkehrsteilnehmer nicht zu irritieren.

Um sicherzustellen, dass an einem auf der Scheibe befindlichen Objekt reflektiertes Licht in die Kamera gelangt, strahlt die Lichtquelle vorteilhafterweise mit einer Vorzugsrichtung derart ab, dass das in die Scheibe eingekoppelte Licht der Lichtquelle unter einem Winkel von ungleich 90° auf die Außenseite der Scheibe auftrifft. Die Vorzugsrichtung kann, beispielsweise einen Winkel im Bereich von etwa 10° bis 30° mit der Innenseite der Scheibe bilden.

Um zu verhindern, dass Licht der Lichtquelle auf direktem Wege, d.h. also ohne die Scheibe zu passieren, in die Kamera gelangt und dadurch die Objektdetektion beeinträchtigt, ist der Spiegel vorteilhafterweise für das Licht der Lichtquelle zumindest im Wesentlichen undurchlässig, wenn die Lichtquelle auf einer der Kamera abgewandten Seite des Spiegels angeordnet ist. Bei einer anderen Anordnung der Lichtquelle ist aber auch eine Verwendung eines für das Licht der Lichtquelle teildurchlässigen Spiegels denkbar.

Gemäß einer weiteren Ausführungsform ist die Kamera mit einer Bildauswerteeinheit gekoppelt, durch die ein auf der Scheibe befindliches Objekt in einem durch den zweiten Abschnitt der Sensorfläche aufgenommenen Bild detektierbar ist. Die Objektdetektion erfolgt vorzugsweise mittels Kantenextraktion, d.h. also mit Hilfe eines Algorithmus, welcher ein Kantenbild berechnet, z.B. unter Verwendung des Sobel-Operators. Die Bildauswerteeinheit kann mit einer Scheibenwischersteuerung gekoppelt sein, welche ein Wischintervall eines Scheibenwischers in Abhängigkeit von dem Objektdetektionsergebnis einstellt. Beispielsweise kann bei Detektion einer größeren Anzahl von Objekten, insbesondere Regentropfen, in dem Detektionsbereich der Scheibe ein kürzeres Wischintervall, d.h. eine kürzere Pause zwischen zwei Wischvorgängen, eingestellt werden, wohingegen bei Detektion einer geringeren Anzahl von Objekten ein größeres Wischintervall, d.h. eine längere Pause zwischen zwei Wischvorgängen, eingestellt werden kann.

Weiterer Gegenstand der Erfindung ist außerdem ein Verfahren zur Steuerung eines Wischintervalls eines Scheibenwischers, insbesondere eines Kraftfahrzeugs, mittels eines optischen Moduls der voranstehend beschriebenen Art, bei dem eine Objektdetektion in einem durch den zweiten Abschnitt der Sensorfläche aufgenommenen Bild durchgeführt wird und in Abhängigkeit von dem Objektdetektionsergebnis das Wischintervall des Scheibenwischers gesteuert wird.

Wie bereits erwähnt wurde, wird die Objektdetektion vorzugsweise unter Vornahme einer Kantenextraktion an dem aufgenommenen Bild durchgeführt. Dabei kann eine extrahierte Kante eines detektierten Objekts mit Hilfe eines adaptiven Schwellenwerts segmentiert werden, wodurch sich beispielsweise durch Rauschen bedingte Bildartefakte eliminieren lassen.

Eine besonders einfache und dennoch zuverlässige Form der Ermittlung der Regenintensität wird dadurch erreicht, dass die Bildpunkte, welche eine segmentierte Kante eines detektierten Objekts bzw. die segmentierten Kanten mehrerer detektierter Objekte darstellen, aufaddiert werden und die Regenintensität anhand der Summe der Bildpunkte ermittelt wird.

Vorteilhaft ist außerdem, ein Bild, das unmittelbar nach dem Durchgang eines Wischerblatts durch den Detektionsbereich der Scheibe aufgenommen wird, auszuwerten und ein darin detektiertes Objekt als ein Störobjekt zu klassifizieren. Bei dem Störobjekt kann es sich beispielsweise um Schmutz, der sich auf der Scheibe befindet, oder um Staub, der sich auf dem Spiegel oder der Linse befindet, handeln, mit anderen Worten also um ein Objekt, dass sich - anders als ein Regentropfen - durch den Scheibenwischer zumindest nicht durch einen einmaligen Wischvorgang entfernen lässt. Das Störobjekt bleibt bei der Objektdetektion in einem nachfolgend aufgenommenen Bild vorzugsweise unberücksichtigt, es wird gewissermaßen also herausgerechnet bzw. von einer aufaddierten Bildpunktsumme abzogen. Auf diese Weise ermöglicht die Kenntnis eines Störobjekts eine noch genauere Ermittlung der Regenintensität.

Eine weitere vorteilhafte Ausführungsform des erfindungsgemäßen Verfahrens besteht darin, dass ein durch den zweiten Abschnitt der Sensorfläche aufgenommenes Bild in mehrere Teilbereiche unterteilt wird und in einem Teilbereich, welcher eine signifikant höhere Helligkeit als die übrigen Teilbereiche aufweist, keine Objektdetektion durchgeführt wird. Auf diese Weise kann verhindert werden, dass ein beispielsweise durch eine Straßenbeleuchtung erzeugtes Bildartefakt das Ergebnis der Objektdetektion verfälscht und somit letztlich die Ermittlung der Regenintensität beeinträchtigt.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine schematische Darstellung eines erfindungsgemä- ßen optischen Moduls; und
- Fig. 2: eine schematische Darstellung eines durch eine Kame- ra des optischen Moduls von Fig. 1 aufgenommenen Bildes.

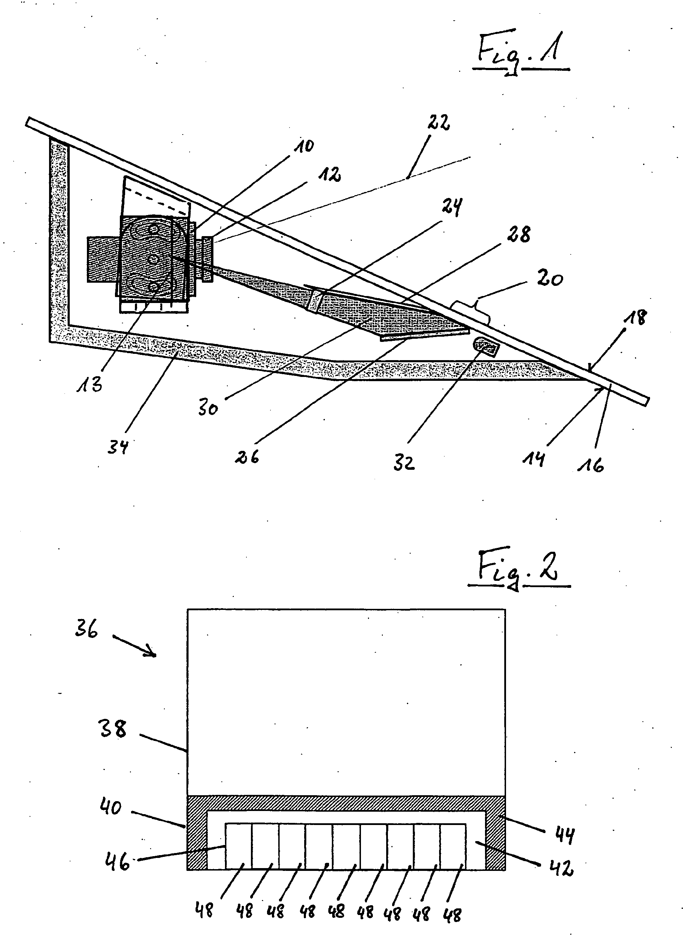

Bei dem in Fig. 1 dargestellten optischen Modul handelt es sich um das optische Modul eines einen Umgebungsbereich eines nicht gezeigten Kraftfahrzeugs erfassenden Assistenzsystems, dessen Kernfunktionalität beispielsweise in der Erkennung einer Fahrspur, eines sich im Fahrweg des Fahrzeugs befindenden Hindernisses und/oder eines Verkehrszeichens besteht und/oder welches als Nachtsichtassistent, als Stauassistent und/oder als Einparkhilfe dient.

Das optische Modul umfasst eine Kamera 10 mit einem Objektiv 12 und einer durch einen Flächensensor, z.B. einen CMOS-Flächensensor, definierten Sensorfläche 13. Bei der Kamera 10 handelt es sich um eine sorgenannte Graustufenkamera oder um eine Farbkamera ohne Infrarotfilter, d.h. der Flächensensor detektiert sowohl sichtbares Licht als auch Licht im infraroten Wellenlängenbereich.

Die Kamera 10 ist im Bereich der Innenseite 14 einer Windschutzscheibe 16 des Fahrzeugs angeordnet und in einen in Fahrtrichtung gesehen vor dem Fahrzeug liegenden Umgebungsbereich des Fahrzeugs gerichtet. Die Kamera blickt mit anderen Worten durch die Scheibe 16 nach draußen (in Fig. 1 nach rechts).

Das Objektiv 12 ist so ausgebildet, dass in einem Fernbereich liegende Objekte, d.h. also sich in einem Abstand von mehreren Metern bis einigen Kilometern zu der Kamera 10 befindliche Objekte, auf der Sensorfläche 13 scharf abgebildet werden. Das Objektiv 12 ist mit anderen Worten auf Unendlich scharf gestellt. Aufgrund des begrenzten Schärfentiefebereichs des Objektivs 12 einerseits und des vergleichsweise geringen Abstandes zwischen der Kamera 10 und der Scheibe 16 andererseits, lassen sich im Bereich der Scheibe 16 und insbesondere auf der Außenseite 18 der Scheibe 16 befindliche Objekte nicht ohne zusätzliche Hilfsmittel auf der Sensorfläche 13 der Kamera 10 scharf abbilden.

Um diesen Nachteil zu überwinden, umfasst das optische Modul eine optische Anordnung, welche im Sichtfeld der Kamera 10 angeordnet ist und durch welche ein einen Detektionsbereich 20 der Scheibe 16 umfassender Nahbereich auf die Sensorfläche 13 der Kamera 10 scharf abbildbar ist. Dabei ist die optische Anordnung so ausgelegt, dass sie in Kombination mit dem Objektiv 12 einen Schärfentiefebereich schafft, welcher sich wenige Zentimeter vor und hinter Scheibe 16, d.h. ausgehend von der Scheibe um wenige Zentimeter nach innen und außen erstreckt.

Die optische Anordnung umfasst eine zwischen dem Objektiv 12 und der Scheibe 16 in einem unteren Bereich des Sichtfeldes 22 der Kamera 10 angeordnete Linse 24 und einen unterhalb der Linse 24 gelegenen und an die Innenseite 14 der Scheibe 16 angrenzenden Spiegel 26. Oberhalb der Linse 24 ist eine sich von der Linse 24 bis zur Innenseite der Scheibe 16 erstreckende Sichtblende 28 angeordnet.

Die Sichtblende 28 und der Spiegel 26 begrenzen den Detektionsbereich 20 der Scheibe 16, so dass dieser eine Fläche von mehreren Quadratzentimetem aufweist. Dabei bildet der Spiegel 26 einen Winkel mit der Innenseite der Scheibe 16 derart, dass er aus der Scheibe 16 austretendes Licht 30 durch die Linse 24 hindurch in die Kamera 10 lenkt, während die Sichtblende 28 verhindert, dass von dem Spiegel reflektiertes Licht auf direkte Wege, d.h. an der Linse 24 vorbei, zu der Kamera 10 gelangen kann.

Sofern es in der Umgebung des Fahrzeugs ausreichend hell ist, um auf der Scheibe befindliche Objekte sichtbar zu machen, handelt es sich bei dem Licht 30 um Umgebungslicht, typischerweise um Tageslicht.

Damit auch bei widrigen Lichtverhältnissen, insbesondere bei Nacht, auf der Scheibe 16 befindliche Objekte detektiert werden können, umfasst das optische Modul mindestens eine infrarotes Licht emittierende Leuchtdiode 32, welche auf der der Kamera 10 abgewandten Seite des Spiegels 26 angeordnet ist. Damit von der Leuchtdiode 32 ausgestrahltes Licht nicht ungehindert in die Kamera 10 eintreten und die Bildaufnahme negativ beeinflussen kann, ist der Spiegel 26 für das Licht der Leuchtdiode 32 undurchlässig.

Die Leuchtdiode 32 ist so orientiert, dass ihre Vorzugsabstrahlrichtung mit der Innenseite 14 der Scheibe 16 einen Winkel im Bereich von etwa 10° bis 30° bildet. Dies hat zur Folge, dass das in die Scheibe 16 eingekoppelte Licht der Leuchtdiode 32 unter einem Winkel auf die Außenseite 18 der Scheibe 16 auftrifft, der sicherstellt, dass zumindest ein Teil des Lichts der Leuchtdiode 32 aus der Scheibe 16 auskoppelt und von einem auf der Scheibe 16 befindlichen Objekt wieder zurück in die Scheibe 16 hinein reflektiert wird, um anschließend von dem Spiegel 26 umgelenkt und durch die Linse 24 in die Kamera 10 gelenkt zu werden.

Durch eine Abdeckung 34 ist das optische Modul gegenüber dem Innenraum des Fahrzeugs abgeschirmt. Insbesondere verhindert die Abdeckung 34, dass störende Lichtreflexionen aus dem Fahrzeuginneren in die Kamera 10 gelangen und das Detektionsergebnis negativ beeinflussen können.

Wie Fig. 2 zu entnehmen ist, setzt sich ein von der Kamera 10 aufgenommenes Bild 36 aus zwei Abschnitten, nämlich einem größeren ersten Abschnitt, dem sogenannten Hauptabschnitt 38, und einem kleineren zweiten Abschnitt, dem sogenannten Nebenabschnitt 40, zusammen.

Der Hauptabschnitt 38 stellt die Projektion des Fernbereichs auf die Sensorfläche 13 dar und wird für die Kernfunktionalität des optischen Moduls genutzt. Bei dem Nebenabschnitt 40 handelt es sich um einen Bildbereich, der nicht für die Kernfunktionalität genutzt wird, beispielsweise da er bei Nichtvorhandensein der optischen Anordnung lediglich die Motorhaube des Fahrzeugs darstellen würde.

Wie Fig. 1 zeigt, ist die optische Anordnung, d.h. die Kombination von Linse 24, Spiegel 26, Sichtblende 28 und LED 32, so angeordnet, dass der Detektionsbereich 20 der Scheibe 16 in dem Nebenabschnitt 40 des Bildes 36 abgebildet wird. Die Abbildung des Detektionsbereichs 20 ist in Fig. 2 mit dem Bezugszeichen 42 bezeichnet. Der die Abbildung 42 des Detektionsbereichs 20 umgebende Teil 44 des Nebenabschnitts 40 ist im Wesentlichen schwarz und resultiert aus der Abschattung durch die Sichtblende 28.

Die Kamera 10 ist mit einer nicht dargestellten Bildauswerteeinheit zur Auswertung der durch die Kamera 10 aufgenommenen Bilder verbünden. Die Auswertung der in dem Hauptabschnitt 38 des Bildes 36 enthaltenen Bildinformation erfolgt in an sich bekannter Weise entsprechend der Kernfunktionalität des optischen Moduls und wird hier nicht näher erläutert. Die Auswertung der im Nebenabschnitt 40 befindlichen Abbildung 42 des Detektionsbereichs 20 dient der Ermittlung der Regenintensität, um einen Scheibenwischer optimal ansteuern zu können.

Zu diesem Zweck wird in der Abbildung 42 des Detektionsbereichs 20 ein Auswertungsbereich 46 definiert, welcher in mehrere Teilbereiche 48 unterteilt ist. Die Teilbereiche 48 werden hinsichtlich ihrer mittleren Helligkeit untersucht, um gegebenenfalls vorhandene störende Lichtpunkte zu detektieren, die aufgrund von Scheinwerfern, Straßen- und/oder Tunnelbeleuchtungen verursacht werden und die weitere Bildauswertung verfälschen können. Im Fall einer Detektion eines derartigen störenden Lichtflecks wird der jeweilige Teilbereich 48, in dem der Lichtfleck detektiert wird, bei der weiteren Bildauswertung außer Acht gelassen, gewissermaßen also deaktiviert.

Anschließend wird in den noch verbleibenden Teilbereichen 48 eine Kantenbildberechnung durchgeführt, beispielsweise mit Hilfe des Sobel-Operators. Die auf diese Weise ermittelten Kanten eines auf der Scheibe 16 befindlichen Objekts, z.B. Wassertropfenkanten, werden dann segmentiert, wobei die Segmentierung vorzugsweise mit einem adaptiven Schwellenwert durchgeführt wird.

Die so erhaltenen segmentierten Bildpunkte werden anschließend aufaddiert, d.h. es wird die Anzahl der segmentierten Bildpunkte ermittelt.

Die Summe bzw. Anzahl der segmentierten Bildpunkte bildet letztlich ein Maß für die Gesamtlänge der Kanten aller in den berücksichtigten Teilbereichen 48 des Auswertungsbereichs 46 detektierten Objekte und somit ein Maß für die Dichte der Wassertropfen im Detektionsbereich 20 der Scheibe 16. Aus der Summe der segmentierten Bildpunkte lässt sich auf diese Weise die Regenintensität ermitteln.

Die Bildauswertungseinheit ist mit einer nicht dargestellten Scheibenwischersteuerung verbunden, welche in Abhängigkeit von der ermittelten Regenintensität den Betrieb eines Scheibenwischers, beispielsweise für die Windschutzscheibe 16, steuert und insbesondere das Wischintervall, d.h. die Pause zwischen zwei Wischvorgängen, variabel einstellt. Alternativ kann die Scheibenwischersteuerung anstelle einer kontinuierlichen Einstellung des Wischintervalls auch fest vorgegebene Betriebsarten des Scheibenwischers auswählen, wie beispielsweise Einzelwischen, Dauerwischen und schnelles Dauerwischen.

Um Regentropfen oder Schneeflocken von anderen Objekten, sogenannten Störobjekten, unterscheiden zu können wird eine unmittelbar nach einem Durchgang des Scheibenwischers durch den Detektionsbereich 20 aufgenommene Abbildung 42 des Detektionsbereichs 20 ausgewertet. Unter der Annahme, dass sich unmittelbar nach dem Durchgang des Scheibenwischers durch den Detektionsbereich 20 keine Wassertropfen oder Schneeflocken in dem Detektionsbereich 20 befinden, sind alle zu diesem Zeitpunkt detektierten Kanten auf Störobjekte zurückzuführen, d.h. also auf Verschmutzungen im Detektionsbereich 20 der Scheibe 16, wie z.B. Insekten oder Kratzer, oder auf Fremdkörper auf der Linse 24 oder auf dem Spiegel 26, wie z.B. Staub.

Die detektierten Störobjekte werden bei der Auswertung eines nachfolgend aufgenommenen Bildes herausgerechnet, d.h. die Summe der aus den Störobjekten resultierenden segmentierten Bildpunkte wird von der Gesamtsumme der segmentierten Bildpunkte abgezogen. Auf diese Weise wird verhindert, dass aufgrund der Störobjekte irrtümlicherweise eine Regenintensität ermittelt wird, die höher als die tatsächlich vorherrschende Regenintensität ist. Letztlich wird hierdurch eine Fehlauslösung des Scheibenwischers oder eine unnötig schnelle Betätigung des Scheibenwischers vermieden.

Um die Entstehung neuer Störobjekte bzw. die Entfernung bereits detektierter Störobjekte berücksichtigen zu können, wird die Störobjektdetektion vorzugsweise nach jedem Durchgang des Scheibenwischers durch den Detektionsbereich 20 durchgeführt.

### Bezugszeichenliste

- 10: Kamera
- 12: Objektiv
- 13: Sensorfläche
- 14: Innenseite
- 16: Windschutzscheibe
- 18: Außenseite
- 20: Detektionsbereich
- 22: Sichtfeld
- 24: Linse
- 26: Spiegel
- 28: Sichtblende
- 30: Licht
- 32: LED
- 34: Abdeckung
- 36: Bild
- 38: Hauptabschnitt
- 40: Nebenabschnitt
- 42: Abbildung
- 44: Teil
- 46: Auswertungsbereich
- 48: Teilbereich

## Patentansprüche

1. Optisches Modul für ein einen Umgebungsbereich eines Fahrzeugs erfassendes Assistenzsystem mit einer im Bereich einer Innenseite (14) einer Scheibe (16), insbesondere Windschutzscheibe, des Fahrzeugs angeordneten und in den Umgebungsbereich des Fahrzeugs gerichteten Kamera (10) mit einem Objektiv (12), durch welches ein Fernbereich auf einen ersten Abschnitt einer Sensorfläche (13) der Kamera (10) scharf abbildbar ist, und mit einer optischen Anordnung, welche im Sichtfeld (22) der Kamera (10) angeordnet ist und durch welche ein einen Detektionsbereich (20) der Scheibe (16) umfassender Nahbereich auf einen zweiten Abschnitt der Sensorfläche (13) der Kamera (10) scharf abbildbar ist, wobei das optische Modul eine Lichtquelle (32) zur Ausleuchtung des Detektionsbereichs (20) der Scheibe (16) umfasst,
**dadurch gekennzeichnet, dass**
die Lichtquelle (32) auf einer der Kamera (10) abgewandten Seite eines Spiegels (26) der optischen Anordnung angeordnet ist.

2. Optisches Modul nach Anspruch 1,
**dadurch gekennzeichnet, dass**
die optische Anordnung mindestens eine zwischen der Scheibe (16) und dem Objektiv (12) angeordnete Linse (24) umfasst.

3. Optisches Modul nach Anspruch 2,
**dadurch gekennzeichnet, dass**
der Spiegel (26) aus dem Detektionsbereich (20) der Scheibe (16) austretendes Licht (30) durch die Linse (24) und in die Kamera (10) lenkt.

4. Optisches Modul nach Anspruch 3,
**dadurch gekennzeichnet, dass**
die optische Anordnung eine Sichtblende (28) umfasst, welche verhindert, dass von dem Spiegel (26) umgelenktes Licht (30) auf den ersten Abschnitt der Sensorfläche der Kamera trifft.

5. Optisches Modul nach einem der vorstehenden Ansprüche,
**dadurch gekennzeichnet, dass**
die Lichtquelle (32) wenigstens eine, insbesondere im infraroten Wellenlängenbereich emittierende, Leuchtdiode aufweist.

6. Optisches Modul nach einem der vorstehenden Ansprüche,
**dadurch gekennzeichnet, dass**
die Lichtquelle (32) mit einer Vorzugsrichtung derart abstrahlt, dass das in die Scheibe (16) eingekoppelte Licht der Lichtquelle (32) unter einem Winkel von ungleich 90° auf die Außenseite (18) der Scheibe (16) auftrifft.

7. Optisches Modul nach Anspruch 6,
**dadurch gekennzeichnet, dass**
die Vorzugsrichtung einen Winkel im Bereich von etwa 10° bis 30° mit der Innenseite (14) der Scheibe (16) bildet.

8. Optisches Modul nach einem der vorstehenden Ansprüche,
**dadurch gekennzeichnet, dass**
der Spiegel (26) der optischen Anordnung für das Licht der Lichtquelle (32) zumindest im Wesentlichen undurchlässig ist.

9. Optisches Modul nach einem der vorsehenden Ansprüche,
**dadurch gekennzeichnet, dass**
die Kamera (10) mit einer Bildauswerteeinheit gekoppelt ist, durch die ein Objekt, insbesondere mittels Kanten-Extraktion, in einem durch den zweiten Abschnitt der Sensorfläche (13) aufgenommenen Bild (42) detektierbar ist.

10. Optisches Modul nach Anspruch 9,
**dadurch gekennzeichnet, dass**
die Bildauswerteeinheit mit einer Scheibenwischersteuerung gekoppelt ist, welche ein Wischintervall eines Scheibenwischers in Abhängigkeit von dem Objektdetektionsergebnis einstellt.

11. Verfahren zur Steuerung eines Wischintervalls eines Scheibenwischers, insbesondere eines Kraftfahrzeugs, mittels eines optischen Moduls nach einem der vorherigen Ansprüche, bei dem eine Objektdetektion in einem durch den zweiten Abschnitt der Sensorfläche (13) aufgenommenen Bild (42) durchgeführt wird und in Abhängigkeit von dem Objektdetektionsergebnis das Wischintervall des Scheibenwischers gesteuert wird.

12. Verfahren nach Anspruch 11,
**dadurch gekennzeichnet, dass**
die Objektdetektion unter Vornahme einer Kanten-Extraktion an dem aufgenommenen Bild (42) durchgeführt wird.

13. Verfahren nach Anspruch 12,
**dadurch gekennzeichnet, dass**
eine extrahierte Kante eines detektierten Objekts mit Hilfe eines adaptiven Schwellenwerts segmentiert wird.

14. Verfahren nach Anspruch 13,
**dadurch gekennzeichnet, dass**
die eine segmentierte Kante eines detektierten Objekts darstellenden Bildpunkte aufaddiert werden und anhand der Summe der Bildpunkte eine Regenintensität ermittelt wird.

15. Verfahren nach einem der Ansprüche 11 bis 14,
**dadurch gekennzeichnet, dass**
ein Bild (42) unmittelbar nach dem Durchgang eines Wischerblatts durch den Detektionsbereich (20) der Scheibe (16) aufgenommen wird und ein darin detektiertes Objekt als ein Störobjekt klassifiziert wird.

16. Verfahren nach Anspruch 15,
**dadurch gekennzeichnet, dass**
das Störobjekt bei der Objektdetektion in einem nachfolgend aufgenommenen Bild (42) unberücksichtigt bleibt.

17. Verfahren nach einem der Ansprüche 11 bis 16,
**dadurch gekennzeichnet, dass**
ein durch den zweiten Abschnitt der Sensorfläche aufgenommenes Bild (42) in mehrere Teilbereiche (48) unterteilt wird und in einem Teilbereich, welcher eine signifikant höhere Helligkeit als die übrigen Teilbereiche aufweist, keine Objektdetektion durchgeführt wird.

## Claims

1. Optical module for an assistance system detecting a surrounding area of a vehicle, having a camera (10) arranged in the area of an inner side (14) of a window (16), in particular a windshield, of the motor vehicle and directed towards the surrounding area of the vehicle, with an objective (12), by which a distant area can be focused on a first section of a sensor surface (13) of the camera (10), and with an optical arrangement, arranged in the field of vision (22) of the camera (10) and by which a close-up area, including a detection area (20) of the window (16), can be focused on a second section of the sensor surface (13) of the camera (10), wherein the optical module includes a light source (32) for illuminating the detection area (20) of the window (16),
**characterized in that**
the light source (32) is arranged on a side of a mirror (26) of the optical arrangement that is directed away from the camera (10).

2. Optical module according to claim 1,
**characterized in that**
the optical arrangement includes at least one lens (24) arranged between the window (16) and the objective (12).

3. Optical module according to claim 2,
**characterized in that**
the mirror (26) directs light (30) emitted from the detection area (20) of the window (16) through the lens (24) and into the camera (10).

4. Optical module according to claim 3,
**characterized in that**
the optical arrangement includes a screen (28) preventing that light (30) diverted by the mirror (26) impinges on the first section of the sensor surface of the camera.

5. Optical module according to one of the preceding claims,
**characterized in that**
the light source (32) comprises at least one light emitting diode, emitting in particular in the infrared wavelength range.

6. Optical module according to one of the preceding claims,
**characterized in that**
the light source (32) radiates in a preferred direction such that the light of the light source (32), coupled into the window (16), impinges on the outside (18) of the window (16) with an angle of unequal 90°.

7. Optical module according to claim 6,
**characterized in that**
the preferred direction forms an angle in the range of approximately 10° to 30° with the inner side (14) of the window (16).

8. Optical module according to one of the preceding claims,
**characterized in that**
the mirror (26) of the optical arrangement is at least essentially impermeable for the light of the light source (32).

9. Optical module according to one of the preceding claims,
**characterized in that**
the camera (10) is coupled with an image evaluation unit, by which an object, in particular by means of edge extraction, is detectable in an image (42) captured by the second section of the sensor surface (13).

10. Optical module according to claim 9,
**characterized in that**
the image evaluation unit is coupled with a windshield wiper control, which sets a wiping interval of a windshield wiper depending on the result of the object detection.

11. Method for control of a wiping interval of a windshield wiper, in particular of a motor vehicle, by means of an optical module according to one of the preceding claims, wherein an object detection is performed in an image (42) captured with the second section the sensor surface (13), and the wiping interval of the windshield wiper is controlled depending on the result of the object detection.

12. Method according to claim 11,
**characterized in that**
the object detection is performed using an edge extraction on the captured image (42).

13. Method according to claim 12,
**characterized in that**
an extracted edge of a detected object is segmented using an adaptive threshold value.

14. Method according to claim 13,
**characterized in that**
pixels depicting a segmented edge of a detected object are added and a rain intensity is determined based on the sum of the pixels.

15. Method according to one of the claims 11 to 14,
**characterized in that**
an image (42) is captured immediately after passage of a wiper blade through the detection area (20) of the window (16) and an object detected therein is classified as faulty object.

16. Method according to claim 15,
**characterized in that**
the faulty object remains unconsidered with the object detection in a subsequently captured image (42).

17. Method according to one of the claims 11 to 16,
**characterized in that**
an image (42) captured by the second section of the sensor surface is divided into several sections (48), and in a section, having a significant higher brightness than the remaining sections, no object detection is performed.

## Revendications

1. Module optique pour un système d'assistance qui appréhende une zone environnante d'un véhicule automobile, comprenant une caméra (10) agencée dans la zone d'une face intérieure (14) d'une vitre (16), en particulier d'une vitre de pare-brise, du véhicule et orientée vers la zone environnante du véhicule, avec un objectif (12) à travers lequel l'image d'une région lointaine peut être formée avec mise au point sur un premier tronçon d'une surface de détection (13) de la caméra (10), et comprenant un agencement optique, agencé dans le champ de vision (22) de la caméra (10) et au moyen duquel l'image d'une région proche, comprenant une zone de détection (20) de la vitre (16), peut être formée avec mise au point sur un second tronçon de la surface de détection (13) de la caméra (10), le module optique comprenant une source de lumière (32) pour l'éclairage de la zone de détection (20) de la vitre (16),
**caractérisé en ce que**
la source de lumière (32) est agencée sur un côté, détourné de la caméra (10), d'un miroir (26) de l'agencement optique.

2. Module optique selon la revendication 1,
**caractérisé en ce que** l'agencement optique comprend au moins une lentille (24) agencée entre la vitre (16) et l'objectif (12).

3. Module optique selon la revendication 2,
**caractérisé en ce que** le miroir (26) renvoie la lumière (30) sortant de la zone de détection (20) de la vitre (16) à travers la lentille (24) et vers la caméra (10).

4. Module optique selon la revendication 3,
**caractérisé en ce que** l'agencement optique comprend un cache (28) qui empêche que la lumière (30) renvoyée par le miroir (26) tombe sur le premier tronçon de la surface de détection de la caméra.

5. Module optique selon l'une des revendications précédentes,
**caractérisé en ce que** la source de lumière (32) comprend au moins une diode électroluminescente, en particulier qui émet dans la plage des longueurs d'onde infrarouge.

6. Module optique selon l'une des revendications précédentes,
**caractérisé en ce que** la source de lumière (32) éclaire avec une direction préférentielle, de telle façon que la lumière de la source lumineuse (32) injectée dans la vitre (16) tombe sur la face extérieure (18) de la vitre (16) sous un angle différent de 90°.

7. Module optique selon la revendication 6,
**caractérisé en ce que** la direction préférentielle forme un angle dans la plage d'environ 10° à 30° avec la face intérieure (14) de la vitre (16).

8. Module optique selon l'une des revendications précédentes,
**caractérisé en ce que** le miroir (26) de l'agencement optique est au moins sensiblement opaque pour la lumière de la source de lumière (32).

9. Module optique selon l'une des revendications précédentes,
**caractérisé en ce que** la caméra (10) est couplée à une unité d'évaluation d'image, au moyen de laquelle un objet peut être détecté dans une image (42) prise par le second tronçon de la surface de détection (13), en particulier au moyen d'une extraction d'arêtes.

10. Module optique selon la revendication 9,
**caractérisé en ce que** l'unité d'évaluation d'image est couplée à une commande d'essuie-glace, qui règle un intervalle de balayage d'un essuie-glace en fonction du résultat de la détection d'objets.

11. Procédé pour la commande d'un intervalle de balayage d'un essuie-glace, en particulier d'un véhicule automobile, au moyen d'un module optique selon l'une des revendications précédentes, dans lequel on exécute une détection d'objets dans une image (42) prise par le second tronçon de la surface de détection (13), et on commande l'intervalle de balayage de l'essuie-glace en fonction du résultat de la détection d'objets.

12. Procédé selon la revendication 11,
**caractérisé en ce que** la détection d'objets est exécutée en procédant à une extraction d'arêtes dans l'image prise (42).

13. Procédé selon la revendication 12,
**caractérisé en ce qu'**une arête extraite dans un objet détecté est segmentée à l'aide d'une valeur seuil adaptative.

14. Procédé selon la revendication 13,
**caractérisé en ce que** les points d'image qui représentent une arête segmentée d'un objet détecté sont additionnés et **en ce que** l'on détermine une intensité de pluie au moyen de la somme des points d'image.

15. Procédé selon l'une des revendications 11 à 14,
**caractérisé en ce qu'**une image (42) est prise immédiatement après le passage d'une lame d'essuie-glace à travers la zone de détection (20) de la vitre (16), et **en ce qu'**un objet détecté dans cette image est classifié comme étant un objet perturbateur.

16. Procédé selon la revendication 15,
**caractérisé en ce que** l'objet perturbateur n'est pas pris en compte lors de la détection d'objets dans une image (42) prise ensuite.

17. Procédé selon l'une des revendications 11 à 16,
**caractérisé en ce qu'**une image (42) prise par le second tronçon de la surface de détection est subdivisée en plusieurs zones partielles (48), et **en ce que** dans une zone partielle qui présente une luminosité significativement plus élevée que les zones partielles restantes, on ne procède à aucune détection d'objets.
